(19) Europäisches Patentamt
European Patent Office
Office européen des brevets

(11) Publication number: **0 365 984 A2**

# (12) EUROPEAN PATENT APPLICATION

(21) Application number: **89119304.7**

(51) Int. Cl.5: **C08G 59/58 , H01L 23/06**

(22) Date of filing: **18.10.89**

(30) Priority: **25.10.88 US 262368**

(43) Date of publication of application: **02.05.90 Bulletin 90/18**

(84) Designated Contracting States: **AT BE CH DE ES FR GB GR IT LI LU NL SE**

(71) Applicant: **W.R. Grace & Co.-Conn. (a *Connecticut corp.*)**
**Grace Plaza 1114 Avenue of the Americas**
**New York New York 10036(US)**

(72) Inventor: **Chen, Chen-Chi**
**10248-201 Hickory Ridge**
**Columbia, MD 21044(US)**
Inventor: **Reuille, Pamela Sue**
**4266 Bright Bay Way**
**Ellicott City MD 21043(US)**

(74) Representative: **UEXKÜLL & STOLBERG**
**Patentanwälte**
**Beselerstrasse 4**
**D-2000 Hamburg 52(DE)**

## (54) Storage stable and rapid curing one-component epoxy resin composition.

(57) A composition comprising
(a) epoxy resin;
(b) organic anhydride; and
(c) polyamine of the structure K-$C(CH_3)_2$-K, where K is

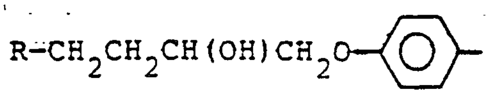

and R is about 70 weight % $-NHCH_2CH_2CH_2N(C_2H_5)_2$ and about 30 weight %

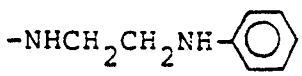

as well as a process for producing the same is disclosed. The composition is especially useful in electronic encapsulation applications.

EP 0 365 984 A2

# STORAGE-STABLE, RAPID-CURING ONE-COMPONENT EPOXY RESIN COMPOSITIONS

## Related Application

U.S.S.N. 196703 filed May 20, 1988, Huynh-Tran, is directed to filled PVC plastisol compositions containing epoxy resins and anhydrides.

## Field of the Invention

The invention relates to epoxy resins.

## Summary of the Invention

The invention involves novel one-component epoxy resin compositions comprising epoxy resin(s), organic anhydride, and a polyamine of the structure $K-C(CH_3)_2-K$, where K is

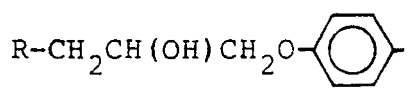

and R is about 70 mole % $-NHCH_2CH_2CH_2N(C_2H_5)_2$ and about 30 mole %

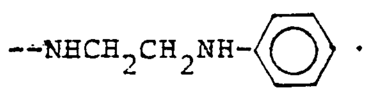

(Hereinafter, "Polyamine" refers to a compound of the above structure.)

The invention compositions are storage-stable and cure rapidly on heating, e.g., at about 120 to 135° C for about 20 - 90 minutes.

## Background of the Invention

Epoxy resins are well-known as adhesives, sealants, potting compounds, and the like. There are two basic types, (1) two-component systems, where the epoxy and curing catalyst are kept in separate packages until just before mixing for use; and (2) one-component systems, where the resin is pre-mixed with and stored with the curing catalyst, and curing is initiated by heating. The instant compositions are in the latter category.

Combinations of epoxy resins with anhydrides are known. See, e.g.:

Chem. Abs. 68 (4):13705n, "Polyvinyl chloride) Plastisols," (Matsubara), disclosing epoxidized plasticizers for chloroethylene polymers, crosslinked with isobutyric anhydride and methylsuccinic anhydride for mechanical improvement;

Chem. Abs. 92 (4):23407b, "Setting of Epoxy Resins by Complexes based on Maleic Anhydride and N-Vinyl Monomers," (Vashevko et al), describing a complex of maleic anhydride with N-vinyl succinimide, used in thermosetting compositions of epoxy resins;

Chem. Abs. 101 (8): 56095f, "Vinyl Chloride Polymer Plastisols," (Eroskey) describing PVC plastisol with "small amounts of epoxy resins and anhydride curing agents"; and

Chem. Abs. 105 (2): 8054c, "Chemical Strengthening Plastisols", (Krejci et al) describing PVC plastisols modified with isophorone diamine, methyltetrahydrophthalic anhydride and 3 percent epoxy resin.

Also, use of Polyamine as a latent curing agent for epoxide resins is known. See Technical Data Sheet

of Pacific Anchor Chemical Corporation (undated).

However, so far as we are aware, the combination of epoxy resin, anhydride, and Polyamine was not known prior to our invention.

## Detailed Description of the Invention

The compositions of this invention comprise three essential ingredients:

(1) an epoxy resin (or mixture of epoxy resins);

(2) an organic anhydride (or mixture of anhydrides);

(3) Polyamine.

In addition to these three ingredients, the composition may also contain conventional epoxy resin additives, such as fillers, thixotropic aids, diluents, pigments, etc.

The proportions of materials that are useful in the compositions in accordance with this invention are set forth in Table I.

Table I

<table>
<tr><th colspan="3">Epoxy Resin Compositions</th></tr>
<tr><th rowspan="2">Component</th><th colspan="2">Parts by Weight</th></tr>
<tr><th>Broad Range</th><th>Preferred Range</th></tr>
<tr><td>Epoxy resin</td><td>30 - 36</td><td>32 - 34</td></tr>
<tr><td>Anhydride</td><td>29 - 35</td><td>31 - 33</td></tr>
<tr><td>Polyamine</td><td>1.2 - 2.0</td><td>1.4 - 1.8</td></tr>
<tr><td>Filler</td><td>0 - 40</td><td>26 - 30</td></tr>
<tr><td>Adhesion promoter</td><td>0 - 0.25</td><td>0.18 - 0.22</td></tr>
<tr><td>Fire retardant, $Sb_2O_3$</td><td>0 - 3.2</td><td>1.2 - 1.6</td></tr>
<tr><td>Thixotropic agent</td><td>0 - 2.0</td><td>1.2 - 1.6</td></tr>
<tr><td>Anhydride/epoxy equivalent ratio (1)</td><td>0.8 - 1.3</td><td>1.1 - 1.2</td></tr>
<tr><td colspan="3">(1) Number of moles of anhydride divided by number of moles of epoxide groups in the epoxy resin(s).</td></tr>
</table>

Materials in the compositions are further described as follows:

## The Epoxy Resin

The type of epoxy resin used herein contemplates any of the conventional saturated or unsaturated, aromatic, aliphatic, cycloaliphatic and heterocyclic compounds containing the epoxide group, i.e.;

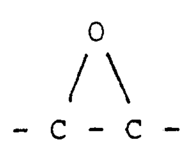

They can be monomeric, dimeric, oligomeric or polymeric epoxies.

Examples of aromatic epoxy resins include, for example, the glycidyl ether derivatives of dihydric phenols such as bisphenol-A, bisphenol-F, resorcinol, hydroquinone and the like. Commercially available epoxy resins of the above type are some of Shell Co's "EPON" resins such as Epon 828, Epon 826, or DOW Chem. Co.'s Dow Epoxy Resins DER 332, DER 324, DER 325 or DER 331; or Ciba-Geigy's Araldite

6010; or the polyglycidyl ether of phenol-formaldehyde novolac resins such as DOW Epoxy Novolacs DEN 431 or DEN 438.

Other suitable commercially available epoxies include the cycloaliphatic epoxy resins such as Union Carbide's ERL-4221 or Ciba-Geigy's CY 179 (3,4-epoxycyclohexylmethyl-3,4-epoxycyclohexane carboxylate), Union Carbides's ERL-4299 (Bis(3,4-Epoxy cyclohexylmethyl)adipate), Union Carbide's ERL-4206 (Vinylcyclohexene dioxide), Union Carbide's ERL-4234 (2-(3,4-Epoxycyclohexyl-5,5-spiro- 3,4-epoxy)-cyclohexane-meta-dioxane) or Ciba-Geigy's CY 184 (Diglycidyl ester of hexahydrophthalic acid).

Other applicable epoxy resins are the acyclic aliphatic epoxies such as epoxidized linseed oil, epoxidized soybean oil or epoxidized diene polymers such as epoxidized polybutadiene.

## The Anhydride

Anhydrides useful herein include alicyclic, aliphatic, cycloaliphatic, aromatic and polyanhydrides or mixtures thereof. Examples of operable alicyclic anhydrides include, but are not limited to, succinic anhydride, maleic anhydride, citraconic anhydride, itaconic anhydride, alkenyl anhydride, dodecenylsuccinic anhydride, tricarballic anhydride. Cycloaliphatic anhydrides applicable in this invention include: hexahydrophthalic anhydride, methylhexahydrophthalic anhydride, tetrahydrophthalic anhydride, methyltetrahydrophthalic anhydride, linoleic acid adduct of maleic anhydride, maleic anhydride adduct of methylcyclopentatiene, and alkylated endoalkylene tetrahydrophthalic anhydride.

Useful aromatic anhydrides include, but are not limited to, phthalic anhydride, pyromellitic anhydride, and benzophenonetetracarboxylic dianhydride.

Polyanhydrides such as polyadipic polyanhydride, polyazelaic polyanhydride, and polysebacic polyanhydride are also applicable.

Anhydride containing copolymers such as styrene-maleic anhydride copolymer, maleic anhydride-vinyl ether copolymer or maleic anhydride copolymer with octodecene-1 can also be used.

Certain of the individual compounds used in the example are identified as follows:

Gamma-glycidoxypropyltrimethoxysilane is $D-CH_2CH_2CH_2Si(OCH_3)_3$, where D is

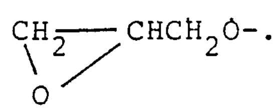

Diglycidyl ether of bis-phenol A is $Q-C(CH_2)_2-Q$ where Q is

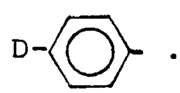

Phenol epoxy novolac resin is

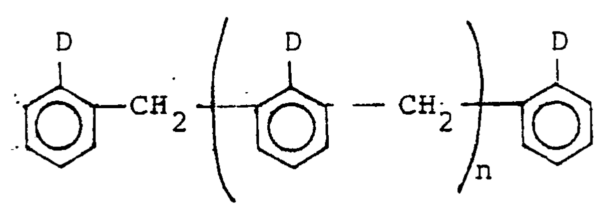

where n is about 0 - 3.0.

Brominated diglycidyl ether of bisphenol A is $G-C(CH_3)_2-G$, where G is

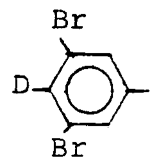 .

Polyamine can be made by conventional synthesis methods, e.g., by reaction of the diglycidyl ether of bisphenol-A with a 70:30 mixture of $H_2NCH_2CH_2CH_2N(C_2H_5)_2$ and

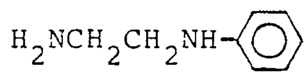 .

Also, it is available commercially as Ancamine® 2014A and Ancamine® 2014AS from Pacific Anchor Chemical Corporation, Los Angeles, CA.

The following Examples illustrate without limiting the invention.

As will be noted, Example 1 is simplest, using only epoxy, anhydride, and Polyamine. Example 2 is like Example 1, but adds fumed silica as a dispersion aid for the Polyamine. Example 3 is like Example 2, but further increases the anhydride/epoxy ratio, with consequent higher $T_g$. Examples 4 and 5 use a second epoxy, a novolac epoxy resin, with a functionality of 2.2. When using novolac epoxies in our compositions, the novolac functionality must be kept in the range of about 2 - 2.7. Otherwise the final resin will not meet our standards for storage stability, as elsewhere herein discussed. In this regard, compare Example 7, using a novolac epoxy with a functionality of 3.6. The composition failed our storage stability test. Example 8 is a control, showing an epoxy resin similar to ours, except that a commercially available curing agent, MY-24, was used instead of our Polyamine. We found the result not to be storage stable.

## Example 1

A mixture containing 10 g of diglycidyl ether of bisphenol-A epoxy resin, 9 g methylhexahydrophthalic anhydride (anhydride/epoxy equivalent ratio 1.0) and 0.4 g of Polyamine was passed through a three-roll mill for uniform mixing. The sample as cured at 135° C for 90 minutes and showed a $T_g$ of 82° C.

## Example 2

A mixture containing 10 g of diglycidyl ether of bisphenol-A epoxy resin, 10 g of methylhexahydrophthalic anhydride (anhydride/epoxy equivalent ratio of 1.12), 0.4 g of Polyamine, and 0.3 g of fumed silica was passed through a three-roll mill for uniform mixing. The sample was cured at 135° C for 90 minutes and showed a $T_g$ of 95° C and water absorption of 1.8% after 24 hours in boiling water.

## Example 3

A mixture containing 10 g of diglycidyl ether of bisphenol-A epoxy resin, 12 g of methylhexahydrophthalic anhydride (anhydride/epoxy equivalent ratio of 1.35), 0.4 g of Polyamine, and 0.3 g of fumed silica was passed through a three-roll mill for uniform mixing. The sample was cured at 135° C for 90 minutes and showed a $T_g$ of 106° C and water absorption of 2.4% after 24 hours in boiling water.

## Example 4

A mixture containing 10 g of diglycidyl ether of bisphenol-A epoxy resin, 17 g of phenol novolac epoxy

resin (functionality 2.2), 9.5 g of brominated diglycidyl ether of bisphenol-A epoxy resin, 26.7 g of methylhexahydrophthalic anhydride (anhydride/epoxy equivalent ratio of 1.12), 1.35 of Polyamine, 1.0 g of fumed silica, 2.5 g of antimony oxide, 0.16 g of gamma-glycidoxypropyltrimethoxysilane (silane adhesion promoter), and 24 g of alumina trihydrate ($Al_2O_3.3H_2O$) was passed through a three-roll mill for uniform mixing. The viscosity of the sample showed an average increase of 60% after it was kept at 40° C for 3 days. It was cured at 135° C for 90 minutes. The cured product showed a $T_g$ of 107° C, water absorption of 1.1% after 24 hours in boiling water, a Shore D hardness of 88, a dielectric constant of 3.5, a loss tangent of 0.0092, a volume resistivity of 1.6 x $10^{16}$ ohm-cm, a dielectric strength of 41 KV/mm and a lap shear of 1900 psi. Similar material was tested for volume resistivity after the sample was immersed in water for 10 days. There was no change in resistivity, indicating electrical properties were not adversely affected by humidity.

## Example 5

A mixture containing 42 g of diglycidyl ether of bisphenol-A epoxy resin, 238 g of phenol novolac epoxy resin (functionality 2.2), 133 g of brominated diglycidyl ether of bisphenol-A epoxy resin, 374 g of methylhexahydrophthalic anhydride (anhydride/epoxy equivalent ratio of 1.12), 19 g of Polyamine, 14 g of fumed silica, 35 g of antimony oxide, 2.24 g of gamma-glycidoxypropyltrimethoxysilane (silane adhesion promoter), and 336 g of alumina trihydrate was passed through a three-roll mill for uniform mixing. The viscosity of the sample showed an average increase of 70% after it was kept at 40° C for 3 days. It was cured at 135° C for 90 minutes. The cured product showed a $T_g$ of 103° C, water absorption of 1.2% after 24 hours in boiling water, a Shore D hardness of 89, a dielectric constant of 3.5, a loss tangent of 0.0109, a volume resistivity of 2.2 x $10^{15}$ ohm-cm, a dielectric strength of 54 KV/mm and a lap shear of 2300 psi.

## Example 6

A mixture containing 20 g of a diglycidyl ether of bisphenol-A epoxy resin, 9.0 g brominated diglycidyl ether of bisphenol-A epoxy resin, 28.4 of methylhexahydrophthalic anhydride (anhydride/epoxy equivalent ratio of 1.35), 1.19 g of polyamine, 1.0 g of fumed silica, 2.5 g of antimony oxide, 0.16 of gamma glycidoxypropyltrimethoxysilane (silane adhesion promoter), and 24 g of alumina trihydrate was passed through a three-roll mill for uniform mixing. The viscosity of the sample showed an average increase of 60% after it was kept at 40° C for 3 days. It was cured at 135° C for 90 minutes. The cured product showed a $T_g$ of 103° C, water absorption of 1.4% after 24 hours in boiling water, a Shore D hardness of 90.

## Example 7 (Control)

A mixture containing 10 g of diglycidyl ether of bisphenol-A epoxy resin, 10 g of phenol novolac epoxy resin (functionality 3.6), 9.5 g of brominated diglycidyl ether of bisphenol-A epoxy resin, 25.9 g of methylhexahydrophthalic anhydride (anhydride/epoxy equivalent ratio of 1.12), 1.31 g of Polyamine, 1.2 g of fumed silica, 2.5 g of antimony oxide, 0.16 g of gamma-glycidoxypropyltrimethoxysilane (silane adhesion promoter), and 24 g of alumina trihydrate was passed through a three-roll mill for uniform mixing. The viscosity of the sample showed an average increase of 100% after it was kept at 40° C for 3 days. It was cured at 135° C for 90 minutes. The cured product showed a $T_g$ of 103° C, water absorption of 1.2% after 24 hours in boiling water, a Shore D hardness of 92.

## Example 8 (Control)

A mixture containing 3 g of diglycidyl ether of bisphenol-A epoxy resin, 17 g of phenol novolac epoxy resin (functionality 2.2), 9.5 g of brominated diglycidyl ether of bisphenol-A epoxy resin, 26.7 g of methylhexahydrophthalic anhydride (anhydride/epoxy equivalent ratio of 1.12), 1.16 g of MY-24 (latent

accelerator for anhydride/epoxy from Ajinomoto), 1.0 g of fumed silica, 2.5 g of antimony oxide, 0.16 g of gamma-glycidoxypropyltrimethoxysilane (silane adhesion promoter), and 24 g of alumina trihydrate was passed through a three-roll mill for uniform mixing. The viscosity of the sample showed an average increase of 100% after it was kept at 40 °C for 3 days. It was cured at 135 °C for 90 minutes. The cured product showed a $T_g$ of 102 °C.

## Storage Stability

To test storage stability we used accelerated conditions, viz., a temperature of 40 °C for 3 days. We determined viscosity of the mixture before and after the test. An increase in viscosity less than 100% was taken as showing acceptable stability. All of the invention compositions met this standard.

Storage stability is of course irrelevant when the epoxy resin is made up for immediate on-site use - in which case, however, the rationale for a one-component resin is lost.

## Uses

The invention compositions have the same general uses as conventional one-component epoxy resins, and are especially useful in electronic encapsulation (potting) applications.

For example, an integrated circuit, within an electronic package comprising ceramic base, frame, and seal ring can be coated with the composition of Example 1, followed by heating.

## Claims

1. Composition comprising
   (a) epoxy resin;
   (b) organic anhydride; and
   (c) polyamine of the structure K-$C(CH_3)_2$-K, where K is

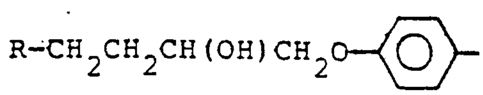

and R is about 70 weight % $-NHCH_2CH_2CH_2N(C_2H_5)_2$ and about 30 weight %

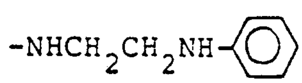 .

2. Composition according to claim 1, additionally containing fumed silica, antimony oxide, alumina trihydrate and/or gamma-glycidoxypropyltrimethoxysilane.

3. Composition according to claims 1 or 2 wherein the epoxy resin comprises diglycidyl ether of bisphenol-A, phenol novolac epoxy resin having a functionality of about 2-2.7, and/or brominated bisphenol-A epoxy resin.

4. Composition according to any of the preceding claims wherein the anhydride is methylhexahydrophthalic anhydride.

5. Composition according to any of the preceding claims comprising, in parts by weight,
   (a) epoxy resin, 30 - 36;
   (b) anhydride, 29 - 35; and
   (c) Polyamine, 1.2 - 2.0

6. Composition according to any of the preceding claims, wherein the anhydride/epoxy equivalent ratio is about 1.1-1.2.

7. Process for producing the composition according to any preceding claim comprising mixing together the components of the composition.

8. An electronic package encapsulated with resin comprising the composition according to any of the claims 1 to 6.